# EUROPEAN PATENT APPLICATION

(11) **EP 4 759 650 A1**
(43) Date of publication of application: **17.06.2026**
(21) Application number: 24857680.3
(22) Date of filing: 01.03.2024
(51) Int. Cl.: B60T 8/40, B60T 13/74

(54) **PEDAL BOX INTEGRATED WITH DUAL SENSORS, BRAKING SYSTEM, AND VEHICLE**

(30) Priority: 31.08.2023 CN 202311130228
(71) Applicant: Huawei Digital Power Technologies Co., Ltd., Shenzhen, Guangdong 518043 (CN)
(72) Inventor: HONG, Zhichao, Shenzhen, Guangdong 518043 (CN); HE, Yuhui, Shenzhen, Guangdong 518043 (CN); WU, Gang, Shenzhen, Guangdong 518043 (CN); LI, Jiandong, Shenzhen, Guangdong 518043 (CN); JIN, Xin, Shenzhen, Guangdong 518043 (CN)
(74) Representative: Isarpatent
(86) International application number: PCT/CN2024/079737
(87) International publication number: WO 2025/044125

(57) **Abstract**

This application provides a pedal box integrated with two sensors, a braking system, and a vehicle, to improve operating reliability of the pedal box, and further improve braking safety of the vehicle. The pedal box includes a housing, a drive rod, a pedal force feedback member, a pressure sensor, and a displacement sensor. The displacement sensor includes a moving component and a fixed component. The housing is configured to accommodate the moving component, the pedal force feedback member, and the pressure sensor. The pedal force feedback member and the pressure sensor are sequentially arranged inside the housing in an axial direction of the drive rod. The housing is further configured to fasten the fixed component. The moving component is disposed between the pedal force feedback member and the fixed component in a radial direction of the drive rod.

## Description

### CROSS-REFERENCE TO RELATED APPLICATIONS

This application claims priority to Chinese Patent Application No. 202311130228.8, filed with the China National Intellectual Property Administration on August 31, 2023 and entitled "PEDAL BOX INTEGRATED WITH TWO SENSORS, PEDAL MECHANISM, BRAKING SYSTEM, AND VEHICLE", which is incorporated herein by reference in its entirety.

### TECHNICAL FIELD

This application relates to the field of vehicle technologies, and in particular, to a pedal box integrated with two sensors, a braking system, and a vehicle.

### BACKGROUND

A brake-by-wire technology is a main development direction of a current vehicle braking system. A difference from a conventional hydraulic braking apparatus lies in that the brake-by-wire technology is a force decoupling solution. To be specific, there is no mechanical or hydraulic connection between a brake pedal and a braking apparatus. When a vehicle is in a brake-by-wire mode, a controller of the vehicle can determine a driver's braking intention based on a signal output by a pedal mechanism, and then send a control signal to control a braking apparatus to generate a braking force.

Two sensors may be configured for the pedal mechanism of the vehicle to implement output of two signals. The two signals may be mutually redundant. When one sensor fails, the controller may still control, based on the signal output by the other sensor, the braking apparatus to perform braking. However, such a pedal mechanism is usually costly, and detection principles of the two used sensors are similar. Consequently, there is a possibility that the two sensors simultaneously fail, which affects braking safety of the vehicle.

### SUMMARY

This application provides a pedal box integrated with two sensors, a braking system, and a vehicle, to improve operating reliability of the pedal box, and further improve braking safety of the vehicle.

According to a first aspect, this application provides a pedal box integrated with two sensors. The pedal box includes a housing, a drive rod, a pedal force feedback member, a pressure sensor, and a displacement sensor. The displacement sensor includes a moving component and a fixed component. The housing is configured to accommodate the moving component, the pedal force feedback member, and the pressure sensor. The pedal force feedback member and the pressure sensor are sequentially arranged inside the housing in an axial direction of the drive rod, to detect a compression force applied by the drive rod to the pedal force feedback member by using the pressure sensor. In addition, the housing is further configured to fasten the fixed component. The moving component is disposed between the pedal force feedback member and the fixed component in a radial direction of the drive rod. The moving component and the drive rod are fixed relative to each other. The displacement sensor detects displacement of the drive rod based on a relative position relationship between the fixed component and the moving component.

The pedal box provided in this application detects two different parameters of the pedal box by using a pressure sensor and a displacement sensor. A detection signal of the pressure sensor and a detection signal of the displacement sensor are mutually redundant. In addition, because detection parameters of the pressure sensor and the displacement sensor are different, and detection principles of the two sensors differ greatly from each other, there is a low risk that the two sensors simultaneously fail in a same environment. When one sensor fails, a state of the pedal box can still be obtained by using the detection signal of the other sensor. This can effectively improve reliability of the pedal box, and further improve braking safety of a vehicle using the pedal box.

**In** some implementations, the pressure sensor detects displacement of the drive rod based on a resistance strain effect, and the pressure sensor includes a piezoresistive pressure sensor, a ceramic pressure sensor, or the like. The displacement sensor detects a compression force of the pedal force feedback member based on an electromagnetic effect. The displacement sensor includes a Hall displacement sensor, an anisotropic magnetoresistance sensor, a giant magnetoresistance sensor, a tunnel magnetoresistance sensor, an eddy current displacement sensor, or the like.

In some implementations, the housing includes a first cover plate, and the first cover plate is disposed opposite to the pedal force feedback member in the axial direction of the drive rod. In a process of assembling the pedal box, the pressure sensor, the displacement sensor, the pedal box feedback member, and the like are first installed inside the housing, and then an end part of the housing is closed by using the first cover plate, to reduce difficulty in assembling the pedal box. The first cover plate includes an opening that communicates an inside of the housing with an outside of the housing, a size of the opening in the radial direction of the drive rod is larger than a radial size of the drive rod, and the opening is used for the drive rod to extend from the inside of the housing to the outside of the housing. This facilitates receiving of an external driving force by the drive rod.

In some implementations, one end of the drive rod is exposed outside the housing. For example, one end of the drive rod extends from the opening of the first cover plate and is exposed outside the housing. The other end of the drive rod is accommodated inside the housing, and the other end of the drive rod is disposed on a side that is of the pedal force feedback member and that faces away from the pressure sensor. The other end of the drive rod is configured to compress the pedal force feedback member under driving of a pedal force, so that the pedal force feedback member generates a compression force, and the pressure sensor detects the compression force of the pedal force feedback member. In addition, the other end of the drive rod is further configured to drive the moving component to move in the axial direction of the drive rod. In this way, relative displacement is generated between the moving component and the fixed component, so that the displacement sensor detects displacement of the drive rod based on the relative displacement.

In some implementations, the pedal box further includes a sealing cover, the sealing cover is disposed adjacent to the first cover plate in the axial direction of the drive rod, and the sealing cover is fastened to a circumferential side wall of the cover plate, so that the opening of the first cover plate is covered by the sealing cover. The sealing cover includes a through hole that extends in the axial direction of the drive rod. The through hole is used for the drive rod to extend from an inside of the sealing cover to an outside of the sealing cover. A size of the through hole in the radial direction of the drive rod is less than or equal to the radial size of the drive rod, so that the through hole is in an interference fit with the drive rod, to form sealing at the fit between the through hole and the drive rod, and reduce a risk that external impurities enter the housing.

In some implementations, one end surface of the pressure sensor in the axial direction of the drive rod is in contact with the pedal force feedback member, and the other end surface of the pressure sensor in the axial direction of the drive rod is in contact with an inner wall of the housing. In a process in which the pedal force feedback member is compressed and moves under driving of the drive rod, the pedal force feedback member continuously presses against the pressure sensor, to apply a generated compression force to the pressure sensor, so that the pressure sensor detects a compression force applied by the drive rod to the pedal force feedback member.

In some implementations, the housing includes a boss, and the boss is disposed, in a radial direction of the housing, on a side that is of a side wall of the housing and that faces away from the inside of the housing. An installation groove is provided on an end surface that is of the boss and that faces away from the inside of the housing, and the installation groove is configured to install the fixed component of the displacement sensor, to fasten the fixed component to the housing.

In some implementations, the moving component of the displacement sensor is fastened to the drive rod, so that the moving component moves synchronously with the drive rod. In the radial direction of the drive rod, a projection of a movement path of the moving component and a projection of the fixed component at least partially overlap. In this way, the moving component keeps being in a sensing area of the fixed component during movement, so that the fixed component can detect displacement of the moving component based on a change in a relative position relationship between the fixed component and the moving component. Because the moving component moves synchronously with the drive rod, the displacement of the moving component is equivalent to displacement of the drive rod. Therefore, the displacement sensor in this application can detect the displacement of the drive rod.

In some implementations, the moving component includes a first connection member and a second connection member, the first connection member extends in the axial direction of the drive rod, the second connection member is connected to one end of the first connection member in the axial direction of the drive rod, the second connection member extends in the radial direction of the drive rod, and the second connection member is configured to be fastened to the drive rod, so that the moving component is fastened to the drive rod.

In some implementations, the inside of the housing includes a partition plate, the partition plate is configured to divide the inside of the housing into a first chamber and a second chamber that are arranged in the radial direction of the drive rod, a size of the first chamber is larger than a size of the second chamber in the radial direction of the drive rod, the first chamber is configured to accommodate the moving component, the pedal force feedback member, and the pressure sensor, and the second chamber is configured to accommodate the moving component. In this chamber separation design, the moving component and the pedal force feedback member are arranged in the radial direction of the drive rod. In a process in which the drive rod drives the pedal force feedback member to move in the first chamber, the moving component moves synchronously in the second chamber.

In some implementations, the partition plate includes a through groove that communicates the first chamber with the second chamber. In the axial direction of the drive rod, a length of the through groove is greater than a length of a movement path of the drive rod. The through groove is used for a part of the moving component to extend to the first chamber to be fastened to the drive rod. This provides feasibility for connection between the moving component and the drive rod.

In some implementations, the pedal force feedback member includes a first moving member, a second moving member, a first elastic member, a second elastic member, and a third elastic member, and the first moving member is disposed between the drive rod and the second moving member in the axial direction of the drive rod. The drive rod is configured to drive the first moving member to move relative to the second moving member in the axial direction of the drive rod. Before the first moving member is in contact with the second moving member, the first moving member is configured to drive, through the first elastic member, the second moving member to compress the second elastic member. After the first moving member is in contact with the second moving member, the drive rod is configured to drive, through the first moving member, the second moving member to first compress only the second elastic member and then compress both the second elastic member and the third elastic member. It can be learned that a compression state of the pedal force feedback member is divided into three stages. In the pedal force feedback member, different combination manners of elastic members are used in the three stages, so that a compression force and a compression stroke of the pedal force feedback member present different linear or approximately linear relationships in the three stages. In this way, pedal force feedback of the pedal box to a driver is closer to pedal force feedback of a mechanical braking mechanism to the driver, so that the driver can learn a braking state of the vehicle based on the pedal force feedback of the pedal box. This helps improve braking safety of the vehicle.

In some implementations, a flange is disposed on a circumference of the first moving member, the flange extends in the radial direction of the drive rod, a clamping slot is provided on a circumference of the flange, the clamping slot extends in the radial direction of the drive rod, and the clamping slot is configured to clamp the moving component of the displacement sensor, so that the moving component is fastened to the first moving member. Because the first moving member moves synchronously with the drive rod in an entire process in which the drive rod compresses the pedal force feedback member, fastening the moving component to the first moving member is equivalent to fastening the moving component to the drive rod.

In some implementations, the pedal force feedback member includes a first fixed member and a second fixed member, and the first fixed member and the second fixed member are sequentially arranged, in the axial direction of the drive rod, on a side that is of the second moving member and that faces away from the first moving member. The first fixed member includes an accommodating groove, the accommodating groove of the first fixed member runs through the first fixed member in the axial direction of the drive rod, a stepped structure is disposed on an inner wall of the accommodating groove of the first fixed member, a stepped surface of the stepped structure faces away from the second moving member, and the stepped surface of the stepped structure is configured to limit a position of one end of the third elastic member. One end surface of the second fixed member in the axial direction of the drive rod is configured to limit a position of the other end of the third elastic member, and the end surface of the second fixed member is in contact with an end surface of the first fixed member. The other end surface of the second fixed member in the axial direction of the drive rod is in contact with the pressure sensor. In this way, a compression force of the pedal force feedback member is applied to an end surface of the pressure sensor through the second fixed member, so that the compression force of the pedal force feedback member is detected.

In some implementations, an accommodating groove is provided on the other end surface of the second fixed member in the axial direction of the drive rod, and the accommodating groove of the second fixed member is configured to accommodate at least a part of a structure of the pressure sensor in the axial direction of the drive rod. The accommodating groove of the second fixed member is used, so that a position of the pressure sensor in a radial direction can be limited, and force stability of the pressure sensor can be improved. In addition, a size of the pedal force feedback member in the axial direction of the drive rod can be reduced, which helps reduce an overall volume of the pedal box.

According to a second aspect, this application further provides a braking system. The braking system includes a controller, a braking apparatus, and the pedal box according to any implementation of the first aspect. The controller is configured to control, in response to a detection signal of either of the pressure sensor and the displacement sensor, the braking apparatus to perform braking. In this design, the pressure sensor and the displacement sensor are mutually redundant. When one sensor fails, the braking system can still implement a braking function by using a detection signal of the other sensor. This improves braking safety of the vehicle.

In some implementations, the controller is configured to control, in response to an abnormal state of the pressure sensor and based on a detection signal of the displacement sensor, the braking apparatus to perform braking. In addition, the controller is configured to control, in response to an abnormal state of the displacement sensor and based on a detection signal of the pressure sensor, the braking apparatus to perform braking.

According to a third aspect, this application further provides a vehicle. The vehicle includes a brake pedal and the braking system according to any implementation of the second aspect. The brake pedal is in drive connection to the drive rod of the pedal box, so that the drive rod can receive a pedal force output by the brake pedal when the brake pedal is pressed. The vehicle provided in this application can brake by using a detection signal of either of the two sensors of the pedal box. Therefore, braking safety of the vehicle is improved.

### BRIEF DESCRIPTION OF DRAWINGS

FIG. 1 is a diagram of a structure of a vehicle according to an embodiment of this application;
FIG. 2 is a diagram of a simplified structure of a braking system according to an embodiment of this application;
FIG. 3 is a diagram of a structure of a pedal box according to an embodiment of this application;
FIG. 4 is a diagram of a structure of a pressure sensor according to an embodiment of this application;
FIG. 5 is a diagram of a detection principle of a displacement sensor according to an embodiment of this application;
FIG. 6 is a diagram of a structure of a pedal force feedback member in a first stage according to an embodiment of this application;
FIG. 7 is a diagram of a structure of a pedal force feedback member in a second stage according to an embodiment of this application;
FIG. 8 is a diagram of a structure of a pedal force feedback member in a third stage according to an embodiment of this application;
FIG. 9 is a curve diagram of a relationship between a compression force and a compression stroke of the pedal force feedback member in three stages shown in FIG. 6 to FIG. 8;
FIG. 10 is a diagram of a structure of another pedal force feedback member according to an embodiment of this application;
FIG. 11 is a curve diagram of a relationship between a compression force and a compression stroke of the pedal force feedback member shown in FIG. 10 in three stages;
FIG. 12 is a diagram of a structure of still another pedal force feedback member according to an embodiment of this application; and
FIG. 13 is a curve diagram of a relationship between a compression force and a compression stroke of the pedal force feedback member shown in FIG. 12 in three stages.

### Reference numerals:

100: vehicle body;
200: braking system; 210: braking apparatus; 210a: front wheel braking apparatus; 210b: rear wheel braking apparatus; 211: brake motor;
212: brake; 220: brake pedal; 230: pedal box; 231: housing; 2311: first cover plate; 23111: opening; 2312: second cover plate;
2313: boss; 23131: installation groove; 2314: partition plate; 23141: through groove; 2315: first chamber; 2316: second chamber; 232: drive rod;
233: pedal force feedback member; 2331: first moving member; 23311: flange; 233111: clamping slot; 23312: groove;
23313: accommodating groove of the first moving member; 2332: second moving member; 23321: accommodating groove of the second moving member; 2333: first elastic member;
2334: second elastic member; 23341: first elastic sub-member; 23342: second elastic sub-member; 2335: third elastic member; 2336: barrier wall;
23361: annular plate; 2337: first fixed member; 23371: first stepped structure; 233711: first stepped surface;
233712: second stepped surface; 23372: accommodating groove of the first fixed member; 23373: second stepped structure; 2338: second fixed member;
23381: accommodating groove of the second fixed member; 2339a/2339b/2339c/2339d/2339e: gasket; 234: pressure sensor;
2341: force sensing element; 235: displacement sensor; 2351: moving component; 23511: first connection member; 23512: second connection member;
2352: fixed component; 236: sealing cover; 2361: through hole; 240: controller;
300: wheel; 300a: front wheel; 300b: rear wheel.

### DESCRIPTION OF EMBODIMENTS

To make objectives, technical solutions, and advantages of this application clearer, the following further describes embodiments of this application in detail with reference to accompanying drawings. However, example implementations can be implemented in a plurality of forms, and shall not be construed as being limited to the implementations described herein. Identical reference numerals in the accompanying drawings indicate identical or similar structures. Therefore, repeated description thereof is omitted. Expressions of positions and directions in embodiments of this application are described by using the accompanying drawings as examples. However, changes may be made as required, and all the changes fall within the protection scope of this application. The accompanying drawings in embodiments of this application are merely used to illustrate relative position relationships and do not indicate an actual scale.

It should be noted that specific details are set forth in the following descriptions for ease of understanding of this application. However, embodiments of this application can be implemented in a plurality of manners different from those described herein, and a person skilled in the art can perform similar promotion without departing from the connotation of embodiments of this application. Therefore, this application is not limited to the following disclosed specific implementations.

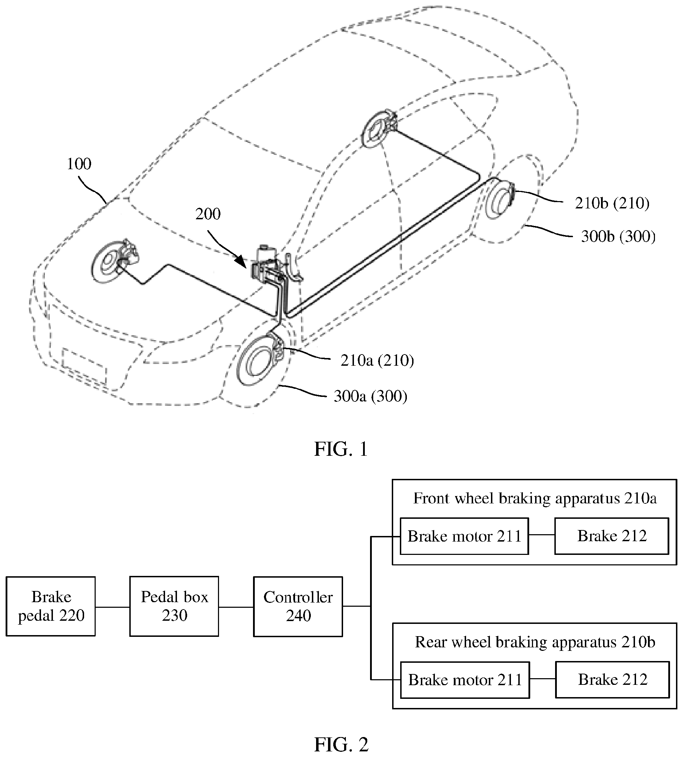

FIG. 1 is a diagram of a structure of a vehicle according to an embodiment of this application. Refer to FIG. 1. The vehicle provided in this embodiment of this application includes a vehicle body 100, a braking system 200, and a plurality of wheels 300. The braking system 200 is installed in the vehicle body 100 of the vehicle, and the vehicle body 100 is supported by the plurality of wheels 300. The braking system 200 is configured to brake the plurality of wheels 300, to implement service braking or parking braking on the vehicle.

In this embodiment of this application, the vehicle includes a pure electric vehicle (pure electric vehicle/battery electric vehicle, PEV/BEV), a hybrid electric vehicle (hybrid electric vehicle, HEV), a range-extended electric vehicle (range-extended electric vehicle, REEV), a plug-in hybrid electric vehicle (plug-in hybrid electric vehicle, PHEV), a new energy vehicle (new energy vehicle, NEV), or the like.

In this embodiment of this application, the vehicle includes a two-axle vehicle or a multi-axle vehicle. In FIG. 1, a two-axle vehicle is used as an example of the vehicle for description. In the two-axle vehicle, the plurality of wheels 300 of the vehicle include two front wheels 300a and two rear wheels 300b. The braking system 200 includes braking apparatuses 210 respectively corresponding to the wheels 300, namely, two front wheel braking apparatuses 210a corresponding to the two front wheels 300a and two rear wheel braking apparatuses 210b corresponding to the two rear wheels 300b. The two front wheel braking apparatuses 210a are configured to brake the two front wheels 300a respectively, and the two rear wheel braking apparatuses 210b are configured to brake the two rear wheels 300b respectively.

FIG. 2 is a diagram of a simplified structure of a braking system according to an embodiment of this application. Refer to FIG. 2. In this embodiment of this application, each braking apparatus 210 of the braking system 200 may be an electro-mechanical brake (electro-mechanical brake, EMB). The braking apparatus 210 includes a brake motor 211 and a brake 212. The brake motor 211 is configured to output a braking force to the brake 212, so that the brake 212 brakes the wheel of the vehicle.

In an embodiment, the brake 212 includes a brake caliper and a brake disc. An output shaft of the brake motor 211 is in drive connection to the brake caliper, the brake disc is in a clamping space of the brake caliper, and the brake disc is fastened to a hub of a corresponding wheel. The brake motor 211 is configured to drive the brake caliper to clamp or release the brake disc, so that the brake caliper applies a braking force to the wheel through the brake disc when the brake caliper clamps the brake disc, and stops braking the wheel when the brake caliper releases the brake disc.

Still refer to FIG. 2. The braking system further includes a brake pedal 220, a pedal box 230, and a controller 240. The brake pedal 220 is installed in a passenger compartment of the vehicle body, and in response to a pedal pressing operation of a driver, the brake pedal 220 moves and outputs a pedal force. The pedal box 230 is fastened to the vehicle body, and the pedal box 230 is in drive connection to the brake pedal 220. The pedal box 230 is configured to receive the pedal force output by the brake pedal 220 and generate a corresponding state change based on a magnitude of the pedal force. The controller 240 is connected to each of the pedal box 230, the front wheel braking apparatuses 210a, and the rear wheel braking apparatuses 210b by using a signal. The controller 240 is configured to control, based on a state of the pedal box 230, the front wheel braking apparatus 210a and the rear wheel braking apparatus 210b to apply braking or release braking. For example, the controller 240 is connected to each of the brake motor of the front wheel braking apparatus 210a and the brake motor of the rear wheel braking apparatus 210b by using a signal, to control, based on a state of the pedal box 230, the brake motor to drive the brake caliper to clamp or release the brake disc.

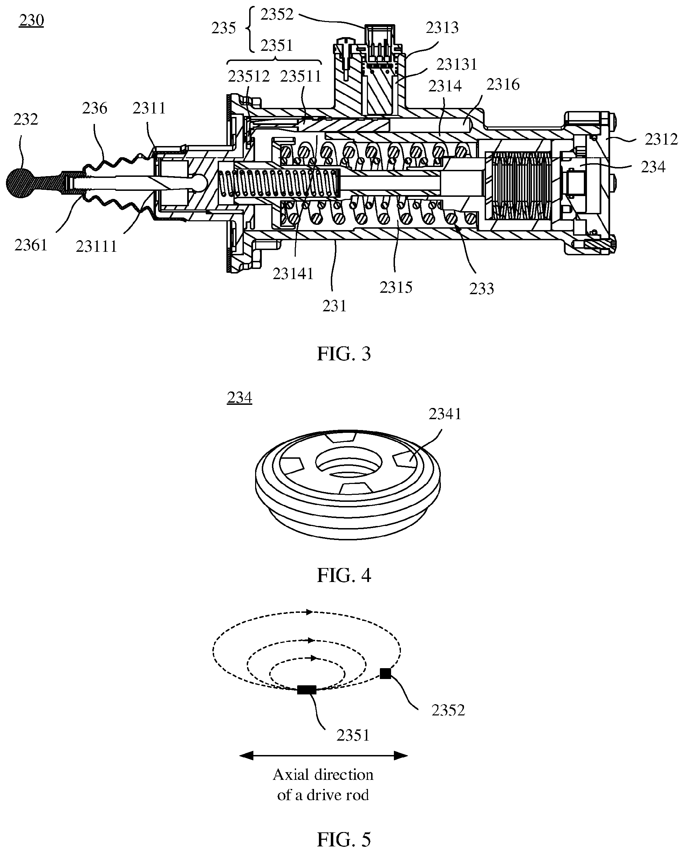

FIG. 3 is a diagram of a structure of a pedal box 230 according to an embodiment of this application. Refer to FIG. 3. In this embodiment of this application, the pedal box 230 includes a housing 231, a drive rod 232, a pedal force feedback member 233, a pressure sensor 234, and a displacement sensor 235. The displacement sensor 235 includes a moving component 2351 and a fixed component 2352. The housing 231 is configured to accommodate the moving component 2351, the pedal force feedback member 233, and the pressure sensor 234. The pedal force feedback member 233 and the pressure sensor 234 are sequentially arranged inside the housing 231 in an axial direction of the drive rod 232. In addition, the housing 231 is further configured to fasten the fixed component 2352. The moving component 2351 is disposed between the pedal force feedback member 233 and the fixed component 2352 in a radial direction of the drive rod 232.

In this embodiment, one end of the drive rod 232 is exposed outside the housing 231, and the end of the drive rod 232 exposed outside the housing 231 is configured to receive driving of a pedal force. In an implementation, the end of the drive rod 232 exposed outside the housing 231 is in drive connection to the brake pedal, so that the drive rod 232 can receive a pedal force output by the brake pedal when the brake pedal is pressed. The other end of the drive rod 232 is accommodated inside the housing 231, the other end of the drive rod 232 is disposed on a side that is of the pedal force feedback member 233 and that faces away from the pressure sensor 234, and the other end of the drive rod 232 is configured to: under the driving of the pedal force, compress the pedal force feedback member 233, and drive the moving component 2351 to move in the axial direction of the drive rod 232. In a process in which the drive rod 232 compresses the pedal force feedback member 233 and drives the pedal force feedback member 233 to move, the pedal force feedback member 233 applies a reaction force to the drive rod. The reaction force is reversely transferred to the brake pedal through the drive rod 232, and is further transferred to the driver by the brake pedal, so that the driver obtains pedal force feedback. After the driver releases the brake pedal, the pedal force feedback member 233 gradually rebounds and drives the drive rod 232 to return to an original position, and the drive rod 232 drives the brake pedal to return to an original position.

Still refer to FIG. 3. In this embodiment of this application, the housing 231 includes a first cover plate 2311. The first cover plate 2311 is disposed opposite to the pedal force feedback member 233 in the axial direction of the drive rod 232. The first cover plate 2311 includes an opening 23111 that communicates the inside of the housing 231 with the outside of the housing 231. A size of the opening 23111 in the radial direction of the drive rod 232 is larger than a radial size of the drive rod 232. The opening 23111 is used for the drive rod 232 to extend from the inside of the housing 231 to the outside of the housing 231. Based on this design, one end of the drive rod 232 extends from the opening 23111 of the first cover plate 2311 and is exposed outside the housing 231.

In some embodiments, the pedal box 230 further includes a sealing cover 236. The sealing cover 236 is disposed adjacent to the first cover plate 2311 in the axial direction of the drive rod 232, and the sealing cover 236 is fastened to a circumferential side wall of the first cover plate 2311, so that the opening 23111 of the first cover plate 2311 is covered by the sealing cover 236. The sealing cover 236 is made of a material having specific elasticity. For example, the material of the sealing cover 236 includes rubber, plastic, and the like. The sealing cover 236 includes a through hole 2361 that extends in the axial direction of the drive rod 232. The through hole 2361 is approximately coaxial with the opening 23111 of the first cover plate 2311 . One end of the drive rod 232 extends from the opening 23111 of the first cover plate 2311 and the through hole 2361 of the sealing cover 236 sequentially and is exposed outside the housing 231. A size of the through hole 2361 of the sealing cover 236 in the radial direction of the drive rod 232 is smaller than the radial size of the drive rod 232, so that the through hole 2361 is in an interference fit with the drive rod 232, to form sealing at the fit between the through hole 2361 and the drive rod 232, and reduce a risk that external impurities enter the housing 231.

Still refer to FIG. 3. In this embodiment of this application, one end surface of the pressure sensor 234 in the axial direction of the drive rod 232 is in contact with the pedal force feedback member 233, and the other end surface of the pressure sensor 234 in the axial direction of the drive rod 232 is in contact with an inner wall of the housing 231. In an implementation, the housing 231 further includes a second cover plate 2312. The second cover plate 2312 is disposed opposite to the pressure sensor 234 in the axial direction of the drive rod 232. One end surface that is of the second cover plate 2312 and that faces the pressure sensor 234 is in contact with the pressure sensor 234, and the end surface of the second cover plate 2312 is the inner wall that is of the housing 231 and that is configured to be in contact with the pressure sensor 234.

**In** a process in which the pedal force feedback member 233 is compressed and moves under driving of the drive rod 232, the pedal force feedback member 233 continuously presses against the pressure sensor 234 and applies an acting force to the end surface of the pressure sensor 234. The acting force is a driving force applied by the drive rod 232 to the pedal force feedback member 233. The pressure sensor 234 can detect, in real time, the acting force applied to the end surface of the pressure sensor 234. In other words, the pressure sensor 234 is configured to detect the driving force applied by the drive rod 232 to the pedal force feedback member 233. For example, the pressure sensor 234 includes a piezoresistive pressure sensor, a ceramic pressure sensor, or the like.

FIG. 4 is a diagram of a structure of a pressure sensor 234 according to an embodiment of this application. Refer to FIG. 3 and FIG. 4. In this embodiment of this application, the pressure sensor 234 includes a chip and a plurality of force sensing elements 2341. The plurality of force sensing elements 2341 are distributed at intervals in a circumferential direction of the drive rod 232 on the end surface that is of the pressure sensor 234 and that faces the pedal force feedback member 233. In a process in which the pedal force feedback member 233 is compressed, the pedal force feedback member 233 applies an acting force to the plurality of force sensing elements 2341. The piezoresistive pressure sensor is used as an example. The plurality of force sensing elements 2341 are varistors, the plurality of force sensing elements 2341 form a bridge circuit for measuring a resistance value, and the chip generates a pressure signal based on a variation amount of a resistance value in the bridge circuit. The chip includes a wiring port, and the chip can be connected to the controller through the wiring port by using a signal, to send the pressure signal to the controller.

Still refer to FIG. 3. In this embodiment of this application, the housing 231 includes a boss 2313. The boss 2313 is disposed, in a radial direction of the housing 231, on a side that is of a side wall of the housing 231 and that faces away from the inside of the housing 231. An installation groove 23131 is provided on an end surface that is of the boss 2313 and that faces away from the inside of the housing 231. The installation groove 23131 is configured to install the fixed component 2352 of the displacement sensor 235, to fasten the fixed component 2352 to the housing 231. The moving component 2351 of the displacement sensor 235 is fastened to the drive rod 232, so that the moving component 2351 moves synchronously with the drive rod 232. In the radial direction of the drive rod 232, a projection of a movement path of the moving component 2351 and a projection of the fixed component 2352 at least partially overlap.

In some embodiments, the inside of the housing 231 includes a partition plate 2314, and the partition plate 2314 is configured to divide the inside of the housing 231 into a first chamber 2315 and a second chamber 2316 that are arranged in the radial direction of the drive rod 232. A size of the first chamber 2315 is larger than a size of the second chamber 2316 in the radial direction of the drive rod 232. The first chamber 2315 is configured to accommodate the moving component 2351, the pedal force feedback member 233, and the pressure sensor 234, and the second chamber 2316 is configured to accommodate the moving component 2351. In this chamber separation design, the moving component 2351 and the pedal force feedback member 233 are arranged in the radial direction of the drive rod 232. In a process in which the drive rod 232 drives the pedal force feedback member 233 to move in the first chamber 2315, the moving component 2351 moves synchronously in the second chamber 2316. In the axial direction of the drive rod 232, a length of the second chamber 2316 is greater than a sum of a length of a movement path of the drive rod 232 and a length of the moving component 2351, thereby providing a sufficient movement space for the moving component 2351.

In addition, the partition plate 2314 includes a through groove 23141 that communicates the first chamber 2315 with the second chamber 2316. In the axial direction of the drive rod 232, a length of the through groove 23141 is greater than the length of the movement path of the drive rod 232. The through groove 23141 is used for a part of the moving component 2351 to extend to the first chamber 2315 to be fastened to the drive rod 232. This provides feasibility for connection between the moving component 2351 and the drive rod 232.

In some embodiments, the moving component 2351 includes a first connection member 23511 and a second connection member 23512. The first connection member 23511 extends in the axial direction of the drive rod 232, the second connection member 23512 is connected to one end of the first connection member 23511 in the axial direction of the drive rod 232, the second connection member 23512 extends in the radial direction of the drive rod 232, and the second connection member 23512 is configured to be fastened to the drive rod 232. For example, the second connection member 23512 extends to the first chamber 2315 through the through groove 23141 and is fastened to the drive rod 232.

In an implementation, the fixed component 2352 is a sensing component, and the moving component 2351 is a sensed component. Based on the foregoing position relationship, the moving component 2351 keeps being in a sensing area of the fixed component 2352 during movement, so that the fixed component 2352 can detect displacement of the moving component 2351 based on a change in a relative position relationship between the fixed component 2352 and the moving component 2351. Because the moving component 2351 moves synchronously with the drive rod 232, the displacement of the moving component 2351 is equivalent to displacement of the drive rod 232. In other words, the displacement sensor 235 in embodiments of this application is configured to detect displacement of the drive rod 232. In addition, the fixed component 2352 includes a wiring port, and the fixed component 2352 can be connected to the controller through the wiring port by using a signal, to send a displacement signal to the controller.

In some other implementations, functions of the fixed component 2352 and the moving component 2351 may be interchanged with each other. To be specific, the fixed component 2352 is a sensed component, and the moving component 2351 is a sensing component. In this case, in a process in which the moving component 2351 moves synchronously with the drive rod 232, a change in a relative position relationship between the moving component 2351 and the fixed component 2352 is consistent with the change in the relative position relationship in the foregoing embodiment. Therefore, the fixed component 2352 keeps being in a sensing area of the moving component 2351, so that the moving component 2351 can detect displacement of the fixed component 2352 relative to the moving component 2351 based on a change in a relative position relationship between the two components. The relative displacement is actual displacement of the moving component 2351 driven by the drive rod 232, that is, displacement of the drive rod 232.

In this embodiment of this application, the displacement sensor 235 includes various types of sensors that are based on a Hall effect principle, a magnetoresistance principle, or an eddy current principle, for example, a Hall displacement sensor based on the Hall effect principle, an anisotropic magnetoresistance (anisotropic magnetoresistive sensor, AMR) sensor, a giant magnetoresistance (giant magnetoresistance, GMR) sensor, and a tunnel magnetoresistance (tunnel magnetoresistance effect, TMR) sensor that are based on the magnetoresistance principle, an eddy current displacement sensor based on the eddy current principle, or the like.

FIG. 5 is a diagram of a detection principle of a displacement sensor 235 according to an embodiment of this application. FIG. 5 shows an example in which the fixed component 2352 is a sensing component and the moving component 2351 is a sensed component. Refer to FIG. 3 and FIG. 5. An example in which the displacement sensor 235 is a Hall displacement sensor is used. The fixed component 2352 is a Hall element, and the moving component 2351 is a magnet. In a process in which the moving component 2351 moves in the axial direction of the drive rod 232, magnetic field strength sensed by the fixed component 2352 gradually changes, and the fixed component 2352 obtains position information of the moving component 2351 based on a change in the magnetic field strength, to determine displacement of the moving component 2351.

In addition, when the moving component 2351 is a magnet, the second chamber 2316 includes an anti-magnetic material layer, and the anti-magnetic material layer covers an inner wall of the second chamber 2316, so that an inner space of the second chamber 2316 can be shielded from an external interference magnetic field. This helps improve detection precision of the displacement sensor 235.

As described above, in the braking system provided in this embodiment, the controller is configured to control, based on a state of the pedal box 230, the braking apparatus to perform braking. In an implementation, a state change of the pedal box 230 includes a driving force change of the drive rod 232 and a displacement change of the drive rod 232. It can be learned from the foregoing embodiment that a driving force of the drive rod 232 is an acting force applied by the pedal force feedback member 233 to the pressure sensor 234, the acting force is detected by the pressure sensor 234, and displacement of the drive rod 232 is detected by the displacement sensor 235. Based on this, in this embodiment, the controller is configured to control, in response to a detection signal of either of the pressure sensor 234 and the displacement sensor 235, the braking apparatus to perform braking. For example, the controller is configured to control, based on a detection signal of either of the pressure sensor 234 and the displacement sensor 235, the brake motor of each braking apparatus to output a braking force, so that the brake motor drives the brake caliper to clamp the brake disc, to brake the vehicle.

In this embodiment of this application, the controller is configured to control, in response to an abnormal state of the pressure sensor 234 and based on a detection signal of the displacement sensor 235, the braking apparatus to perform braking. In addition, the controller is configured to control, in response to an abnormal state of the displacement sensor 235 and based on a detection signal of the pressure sensor 234, the braking apparatus to perform braking. In this design, the pressure sensor 234 and the displacement sensor 235 are mutually redundant. When one sensor fails, the braking system can still implement a braking function by using a detection signal of the other sensor. This improves braking safety of the vehicle.

**In** addition, because detection parameters of the pressure sensor 234 and the displacement sensor 235 are different, and detection principles of the two sensors differ greatly from each other, for example, the pressure sensor 234 implements detection based on a resistance strain effect, and the displacement sensor 235 implements detection based on an electromagnetic effect, there is a low risk that the two sensors simultaneously fail in a same environment. This helps further improve braking safety of the vehicle.

After an overall structure of the pedal box is described, the following describes a specific structure of the pedal force feedback member 233 of the pedal box.

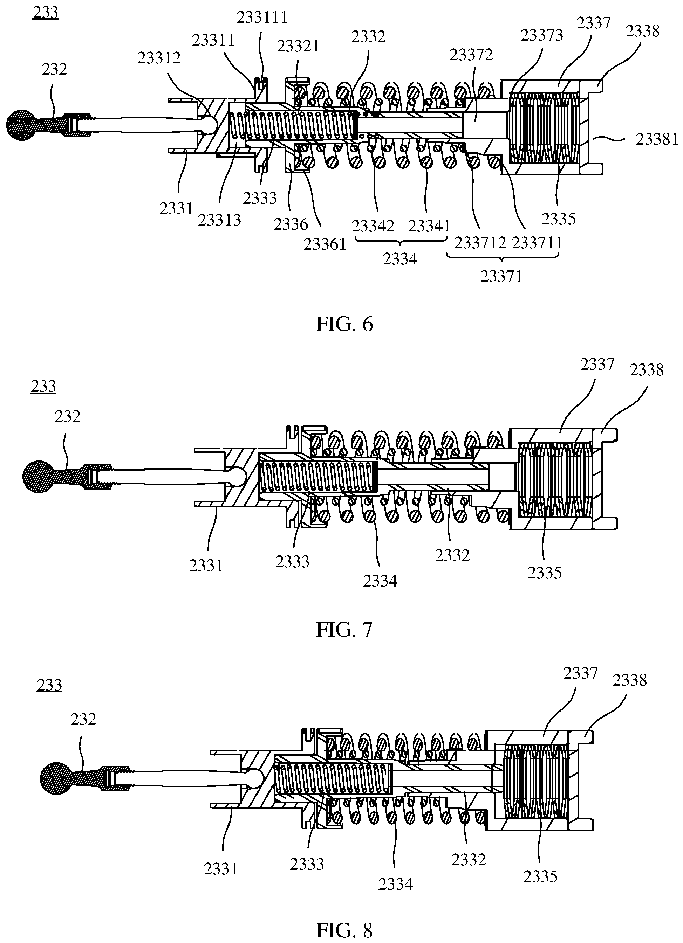

FIG. 6 is a diagram of a structure of a pedal force feedback member 233 according to an embodiment of this application. Refer to FIG. 6. In this embodiment of this application, the pedal force feedback member 233 is in a form of segment combination of elastic members. The pedal force feedback member 233 includes a first moving member 2331, a second moving member 2332, a first elastic member 2333, a second elastic member 2334, and a third elastic member 2335. The first moving member 2331 is disposed adjacent to the second moving member 2332 in the axial direction of the drive rod 232. Under driving of a pedal force of the brake pedal, the drive rod 232 is configured to drive the first moving member 2331 to move relative to the second moving member 2332 in the axial direction of the drive rod 232. Before the first moving member 2331 is in contact with the second moving member 2332, the first moving member 2331 is configured to drive, through the first elastic member 2333, the second moving member 2332 to compress the second elastic member 2334. After the first moving member 2331 is in contact with the second moving member 2332, the drive rod is configured to drive, through the first moving member 2331, the second moving member 2332 to first compress only the second elastic member 2334 and then compress both the second elastic member 2334 and the third elastic member 2335.

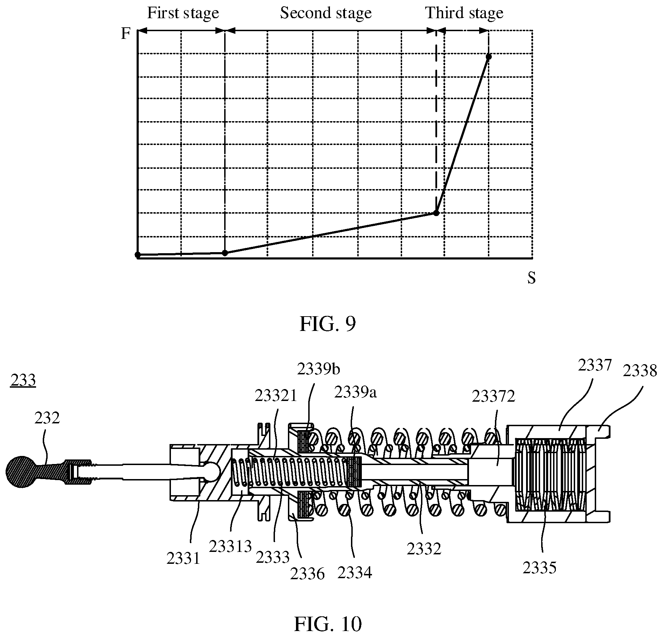

In this embodiment, a compression state of the pedal force feedback member 233 is divided into three stages. FIG. 6 to FIG. 8 are diagrams of structures of the pedal force feedback member 233 in the three stages. FIG. 9 is a curve diagram of a relationship between a compression force F and a compression stroke S of the pedal force feedback member 233 in the three stages. A compression force F of the pedal force feedback member 233 is a driving force applied by the drive rod 232 to the pedal force feedback member 233, and a compression stroke S of the pedal force feedback member 233 is displacement of the drive rod 232.

First, refer to a first stage shown in FIG. 6. The first stage is as follows: Before the first moving member 2331 is in contact with the second moving member 2332, the first moving member 2331 compresses the first elastic member 2333 during movement, an elastic force generated by the compression of the first elastic member 2333 drives the second moving member 2332 to move, and the second moving member 2332 compresses the second elastic member 2334 during movement. Therefore, in this stage, the first elastic member 2333 and the second elastic member 2334 are simultaneously deformed, and a compression force of the pedal force feedback member 233 is an elastic force obtained after the first elastic member 2333 and the second elastic member 2334 are connected in series. For a relative relationship between a compression force F and a compression stroke S of the pedal force feedback member 233, refer to a first stage in FIG. 9.

Refer to a second stage shown in FIG. 7. The second stage is as follows: After the first moving member 2331 is in contact with the second moving member 2332, the first elastic member 2333 is compressed to a specific state and is no longer further deformed, the drive rod 232 drives, directly through the first moving member 2331, the second moving member 2332 to move, and the second moving member 2332 compresses only the second elastic member 2334. In this stage, an elastic force of the first elastic member 2333 is constant, and an elastic force of the second elastic member 2334 continuously increases due to continuous deformation. A compression force of the pedal force feedback member 233 is a sum of the constant elastic force of the first elastic member 2333 and the continuously increasing elastic force of the second elastic member 2334. For a relative relationship between a compression force F and a compression stroke S of the pedal force feedback member 233, refer to a second stage in FIG. 9.

Refer to a third stage shown in FIG. 8. In the third stage, a deformation amount of the first elastic member 2333 is the same as a deformation amount in the second stage, the drive rod 232 drives, directly through the first moving member 2331, the second moving member 2332 to move, and the second moving member 2332 compresses both the second elastic member 2334 and the third elastic member 2335. In this stage, the second elastic member 2334 and the third elastic member 2335 are in a parallel connection relationship, and a compression force of the pedal force feedback member 233 is a sum of the constant elastic force of the first elastic member 2333 and an elastic force obtained after the second elastic member 2334 and the third elastic member 2335 are connected in parallel. For a relative relationship between a compression force F and a compression stroke S of the pedal force feedback member 233, refer to a third stage in FIG. 9.

It can be learned from the foregoing analysis that, in the pedal force feedback member 233 provided in this embodiment, different combination manners of the elastic members are used in the three stages, so that the compression force F and the compression stroke S of the pedal force feedback member 233 present different linear or approximately linear relationships in the three stages, and curvatures of relationship curves of the compression force F and the compression stroke S in the stages differ greatly from each other. In this way, pedal force feedback of the pedal box 230 to the driver is closer to pedal force feedback of a mechanical braking mechanism to the driver, so that the driver can learn a braking state of the vehicle based on the pedal force feedback of the pedal box 230. This helps improve braking safety of the vehicle.

In addition, in this embodiment of this application, a mapping relationship between the compression force F and the compression stroke S of the pedal box feedback member 233 may be pre-stored in the controller of the braking system. The controller is configured to compare, after obtaining detection signals of the pressure sensor and the displacement sensor, a mapping relationship between the two detection signals with the pre-stored mapping relationship. If a difference between the two mapping relationships exceeds a threshold range, it indicates that at least one of the detection signal of the pressure sensor and the detection signal of the displacement sensor is incorrect, and the controller further determines whether the pressure sensor and the displacement sensor fail.

Still refer to FIG. 6. A flange 23311 is disposed on a circumference of the first moving member 2331, and the flange 23311 extends in the radial direction of the drive rod 232. A clamping slot 233111 is provided on a circumference of the flange 23311, the clamping slot 233111 extends in the radial direction of the drive rod 232, and the clamping slot 233111 is configured to clamp the moving component 2351 of the displacement sensor 235 (refer to FIG. 3), so that the moving component 2351 is fastened to the first moving member 2331. Because the first moving member 2331 moves synchronously with the drive rod 232 in an entire process in which the drive rod 232 compresses the pedal force feedback member 233, and the first moving member 2331 and the drive rod 232 are fixed relative to each other, fastening the moving component 2351 to the first moving member 2331 is equivalent to fastening the moving component 2351 to the drive rod 232.

In an implementation, the flange 23311 is located on either end surface of the first moving member 2331 in the axial direction of the drive rod 232. Alternatively, the flange 23311 is located at a position between two end surfaces of the first moving member 2331. For example, in the embodiment shown in FIG. 6, the flange 23311 is located on an end surface that is of the first moving member 2331 and that is away from the drive rod 232.

In addition, a groove 23312 is provided, in the axial direction of the drive rod 232, on an end surface that is of the first moving member 2331 and that faces the drive rod 232. The groove 23312 is configured to accommodate one end of the drive rod 232. A fit between the groove 23312 and an end part of the drive rod 232 can reduce a risk that a contact position between the first moving member 2331 and the drive rod 232 shifts, so that a driving force of the drive rod 232 is reliably transferred to the pedal force feedback member 233. For example, an inner wall of the groove 23312 has an arc-shaped surface, and correspondingly, the end part of the drive rod 232 also has an arc-shaped surface, to reduce a risk that the end part of the drive rod 232 is stuck in the groove 23312.

In this embodiment of this application, an end surface of the first moving member 2331 and an end surface of the second moving member 2332 are arranged at an interval in the axial direction of the drive rod 232. At least one of the end surface of the first moving member 2331 and the end surface of the second moving member 2332 includes an accommodating groove. An accommodating groove 23313 of the first moving member 2331 is configured to accommodate one end of the first elastic member 2333, and an accommodating groove 23321 of the second moving member 2332 is configured to accommodate the other end of the first elastic member 2333. The two ends of the first elastic member 2333 are arranged opposite to each other in the axial direction of the drive rod 232. The accommodating groove 23313 of the first moving member 2331 or the accommodating groove 23321 of the second moving member 2332 can limit a position of the first elastic member 2333 in a radial direction, to reduce a risk that radial position shifting or arching occurs when the first elastic member 2333 is compressed, so that the first elastic member 2333 provides a stable elastic force.

For example, the first elastic member 2333 includes a spring, silicone, resin, rubber, or a plurality of elastic plates stacked in the axial direction of the drive rod 232.

Refer to FIG. 6 and FIG. 7. In this embodiment of this application, the accommodating groove 23313 of the first moving member 2331 is configured to accommodate an end surface of the second moving member 2332, and a variable gap between a groove bottom of the accommodating groove 23313 of the first moving member 2331 and the end surface of the second moving member 2332 is used to limit a distance that the first moving member 2331 moves relative to the second moving member 2332 in the axial direction of the drive rod 232. In the first stage in which the pedal force feedback member 233 is compressed, the drive rod 232 drives the first moving member 2331 to move relative to the second moving member 2332, and the gap between the groove bottom of the accommodating groove 23313 of the first moving member 2331 and the end surface of the second moving member 2332 gradually decreases until the groove bottom of the accommodating groove 23313 of the first moving member 2331 is in contact with the end surface of the second moving member 2332. The first moving member 2331 and the second moving member 2332 are fixed relative to each other. Then, the second stage of the compression state of the pedal force feedback member 233 starts.

In some embodiments, both the end surface of the first moving member 2331 and the end surface of the second moving member 2332 in the axial direction of the drive rod 232 include an accommodating groove. A size of an accommodating groove 23313 of the first moving member 2331 in the radial direction of the drive rod 232 is larger than a size of the end surface of the second moving member 2332 in the radial direction of the drive rod 232. A size of an accommodating groove 23321 of the second moving member 2332 in the radial direction of the drive rod 232 is larger than a size of the first elastic member 2333 in the radial direction of the drive rod 232. In this embodiment, two ends of the first elastic member 2333 are respectively accommodated in the accommodating groove 23313 of the first moving member 2331 and the accommodating groove 23321 of the second moving member 2332. A groove bottom of the accommodating groove 23313 of the first moving member 2331 is configured to limit a position of one end of the first elastic member 2333, and a groove bottom of the accommodating groove 23321 of the second moving member 2332 is configured to limit a position of the other end of the first elastic member 2333. When the first moving member 2331 moves to a position at which the groove bottom of the accommodating groove 23313 of the first moving member 2331 is in contact with the end surface of the second moving member 2332, a spacing between the groove bottom of the accommodating groove 23313 of the first moving member 2331 and the groove bottom of the accommodating groove 23321 of the second moving member 2332 no longer changes. Therefore, further deformation of the first elastic member 2333 is stopped.

Still refer to FIG. 6. In this embodiment of this application, the pedal force feedback member 233 further includes a barrier wall 2336. The barrier wall 2336 is disposed around a circumference of the second moving member 2332, the barrier wall 2336 and the second elastic member 2334 are arranged in the axial direction of the drive rod 232, and the barrier wall 2336 is configured to limit a position of one end of the second elastic member 2334, so that the second moving member 2332 compresses and deforms the second elastic member 2334 by using the barrier wall 2336 during movement. The barrier wall 2336 and the second moving member 2332 may be of an integrated structure, to simplify a structure and assembly difficulty of the pedal box.

In an implementation, the barrier wall 2336 is located at a position between two end surfaces of the second moving member 2332 in the axial direction of the drive rod 232. A part of the second elastic member 2334 is sleeved on the second moving member 2332, so that the end of the second elastic member 2334 abuts against the barrier wall 2336.

In some embodiments, an annular plate 23361 is disposed on a side that is of the barrier wall 2336 and that faces the second elastic member 2334. The annular plate 23361 extends in the axial direction of the drive rod 232, and the annular plate 23361 and a side wall of the second moving member 2332 are arranged at an interval in the radial direction of the drive rod 232. A size of the annular plate 23361 in the radial direction of the drive rod 232 is larger than a size of the second elastic member 2334 in the radial direction of the drive rod 232. The second elastic member 2334 is disposed between the side wall of the second moving member 2332 and the annular plate 23361 in the radial direction of the drive rod 232, to limit a position of the second elastic member 2334 in the radial direction of the drive rod 232 by using the side wall of the second moving member 2332 and the annular plate 23361, and reduce a risk that radial position shifting or arching occurs when the second elastic member 2334 is compressed, so that the second elastic member 2334 provides a stable elastic force.

In addition, in some embodiments, the second elastic member 2334 includes a first elastic sub-member 23341 and a second elastic sub-member 23342. Positions of one end of the first elastic sub-member 23341 and one end of the second elastic sub-member 23342 are limited by the barrier wall 2336, and the first elastic sub-member 23341 is disposed around a circumference of the second elastic sub-member 23342. In this case, the second moving member 2332, the second elastic sub-member 23342, the first elastic sub-member 23341, and the annular plate 23361 are sequentially arranged in the radial direction of the drive rod 232. In a movement process of the second moving member 2332, the second moving member 2332 compresses both the first elastic sub-member 23341 and the second elastic sub-member 23342. Therefore, an elastic force of the second elastic member 2334 is equivalent to an elastic force obtained after the first elastic sub-member 23341 and the second elastic sub-member 23342 are connected in parallel. In this manner, the two elastic sub-members are connected in parallel through sleeving, so that the second elastic member 2334 of a relatively small volume can provide a relatively large elastic force, to reduce a space occupied by the second elastic member 2334. This helps implement a miniaturization design of the pedal box.

In an embodiment, both the first elastic sub-member 23341 and the second elastic sub-member 23342 are springs. In an embodiment, the first elastic sub-member 23341 and the second elastic sub-member 23342 have opposite winding directions, so that a risk of interference caused by arching or deflection of the first elastic sub-member 23341 and the second elastic sub-member 23342 can be reduced. In an embodiment, a size of the spring in the first elastic sub-member 23341 is larger than a size of the spring in the second elastic sub-member 23342. In an embodiment, an inner diameter of the spring in the first elastic sub-member 23341 is greater than an inner diameter of the spring in the second elastic sub-member 23342. In an embodiment, a length of the spring in the first elastic sub-member 23341 is greater than a length of the spring in the second elastic sub-member 23342.

Still refer to FIG. 6. In this embodiment of this application, the pedal force feedback member 233 further includes a first fixed member 2337. The first fixed member 2337 is disposed, in the axial direction of the drive rod 232, on a side that is of the second moving member 2332 and that faces away from the first moving member 2331. The first fixed member 2337 extends in the axial direction of the drive rod 232. A first stepped structure 23371 is disposed on a circumference of the first fixed member 2337, and the first stepped structure 23371 is configured to limit a position of the other end of the second elastic member 2334. With reference to the foregoing embodiment, positions of two ends of the second elastic member 2334 that are arranged in the axial direction of the drive rod 232 are respectively limited by the barrier wall 2336 and the first stepped structure 23371. In a process in which the second moving member 2332 moves relative to the first fixed member 2337, a gap between the barrier wall 2336 and the first stepped structure 23371 in the axial direction of the drive rod 232 gradually decreases, to compress and deform the second elastic member 2334. For example, the first stepped structure 23371 is an annular structure that surrounds the circumference of the first fixed member 2337. In this way, the first stepped structure 23371 can limit a position of an end part of the second elastic member 2334 in an entire circumferential direction, to improve reliability of a structure of the pedal force feedback member 233.

In an implementation, the first stepped structure 23371 is located at a position between two end surfaces of the first fixed member 2337 in the axial direction of the drive rod 232, and a part of the second elastic member 2334 is sleeved on the first fixed member 2337, so that the other end of the second elastic member 2334 abuts against the first stepped structure 23371.

In some embodiments, when the second elastic member 2334 includes two elastic sub-members, the first stepped structure 23371 limits positions of the other end of the first elastic sub-member 23341 and the other end of the second elastic sub-member 23342. The first stepped structure 23371 includes a first stepped surface 233711 and a second stepped surface 233712 that are arranged in a stepped shape. The first stepped surface 233711 and the second stepped surface 233712 face the second moving member 2332. The first stepped surface 233711 is located on a side that is of the second stepped surface 233712 and that is away from an end surface, facing the second moving member 2332, of the first fixed member 2337. In other words, a gap between the first stepped surface 233711 and the barrier wall 2336 is larger than a gap between the second stepped surface 233712 and the barrier wall 2336. The first stepped surface 233711 is configured to limit the position of the other end of the first elastic sub-member 23341, and the second stepped surface 233712 is configured to limit the position of the other end of the second elastic sub-member 23342. Proper design of positions of the first stepped surface 233711 and the second stepped surface 233712 in the axial direction of the drive rod 232 ensures that the second moving member 2332 compresses the first elastic sub-member 23341 and the second elastic sub-member 23342 when the second moving member 2332 starts to move, so that the second elastic member 2334 can provide an expected elastic force in a movement process of the second moving member 2332.

Still refer to FIG. 6. In this embodiment of this application, the first fixed member 2337 includes an accommodating groove, and the accommodating groove 23372 of the first fixed member 2337 runs through the first fixed member 2337 in the axial direction of the drive rod 232. A second stepped structure 23373 is disposed on an inner wall of the accommodating groove 23372 of the first fixed member 2337, a stepped surface of the second stepped structure 23373 faces away from the second moving member 2332, and the stepped surface of the second stepped structure 23373 is configured to limit a position of one end of the third elastic member 2335. In this embodiment, the third elastic member 2335 is accommodated in the accommodating groove 23372 of the first fixed member 2337, and the accommodating groove 23372 of the first fixed member 2337 can limit a position of the third elastic member 2335 in a radial direction, to reduce a risk that radial position shifting or arching occurs when the third elastic member 2335 is compressed, so that the third elastic member 2335 provides a stable elastic force.

For example, the third elastic member 2335 includes a spring, silicone, resin, rubber, or a plurality of elastic plates stacked in the axial direction of the drive rod.

Refer to FIG. 6 to FIG. 8. The accommodating groove 23372 of the first fixed member 2337 is configured to accommodate an end surface that is of the second moving member 2332 and that is close to the first fixed member 2337, and a variable gap between the stepped surface of the second stepped structure 23373 and the end surface that is of the second moving member 2332 and that is close to the first fixed member 2337 is used to limit a moving distance between the second elastic member 2334 and the third elastic member 2335 that are compressed by the second moving member 2332 simultaneously . In the first stage in which the pedal force feedback member 233 is compressed, the second moving member 2332 is driven by the compressed first elastic member 2333 and moves relative to the first fixed member 2337, and the gap between the end surface of the second moving member 2332 and the stepped surface of the second stepped structure 23373 gradually decreases. In the second stage in which the pedal force feedback member 233 is compressed, the second moving member 2332 is driven by the drive rod 232 directly through the first moving member 2331 and continues to move relative to the first fixed member 2337, and the gap between the end surface of the second moving member 2332 and the stepped surface of the second stepped structure 23373 further decreases until the end surface of the second moving member 2332 is flush with the stepped surface of the second stepped structure 23373. In the foregoing two stages, the second elastic member 2334 is continuously compressed and deformed by the second moving member 2332, and the third elastic member 2335 is not compressed. Therefore, the third elastic member 2335 is not deformed. When the second moving member 2332 continues to move relative to the first fixed member 2337, the third stage of the compression state of the pedal force feedback member 233 starts. The end surface of the second moving member 2332 is beyond the stepped surface of the second stepped structure 23373 and starts to compress the third elastic member 2335. In this stage, both the second elastic member 2334 and the third elastic member 2335 are compressed due to movement of the second moving member 2332.

In some embodiments, the pedal force feedback member 233 further includes a second fixed member 2338. The second fixed member 2338 is disposed, in the axial direction of the drive rod 232, on a side that is of the first fixed member 2337 and that faces away from the second moving member 2332. One end surface of the second fixed member 2338 in the axial direction of the drive rod 232 is configured to limit a position of the other end of the third elastic member 2335, and the end surface of the second fixed member 2338 is in contact with an end surface of the first fixed member 2337. With reference to the foregoing embodiment, in the first stage and the second stage in which the pedal force feedback member 233 is compressed, positions of two ends of the third elastic member 2335 are respectively limited by the second stepped structure 23373 and the second fixed member 2338. In the third stage in which the pedal force feedback member 233 is compressed, the end surface of the second moving member 2332 is beyond the stepped surface of the second stepped structure 23373, and a gap between the end surface of the second moving member 2332 and the second fixed member 2338 in the axial direction of the drive rod 232 gradually decreases, to compress and deform the third elastic member 2335.

In this embodiment, the other end surface of the second fixed member 2338 in the axial direction of the drive rod 232 is configured to be in contact with the pressure sensor 234 (refer to FIG. 3). In this way, a driving force applied by the drive rod 232 to the pedal force feedback member 233 is applied to an end surface of the pressure sensor 234 through the second fixed member 2338, so that the driving force of the drive rod 232 is detected.

In an implementation, an accommodating groove is provided on the other end surface of the second fixed member 2338 in the axial direction of the drive rod 232. The accommodating groove 23381 of the second fixed member 2338 is configured to accommodate at least a part of a structure of the pressure sensor 234 in the axial direction of the drive rod 232, and a groove bottom of the accommodating groove 23381 of the second fixed member 2338 is in contact with the end surface of the pressure sensor 234. The accommodating groove 23381 of the second fixed member 2338 is used, so that a position of the pressure sensor 234 in a radial direction can be limited, and force stability of the pressure sensor 234 can be improved. In addition, a size of the pedal force feedback member 233 in the axial direction of the drive rod 232 can be reduced, which helps reduce an overall volume of the pedal box.

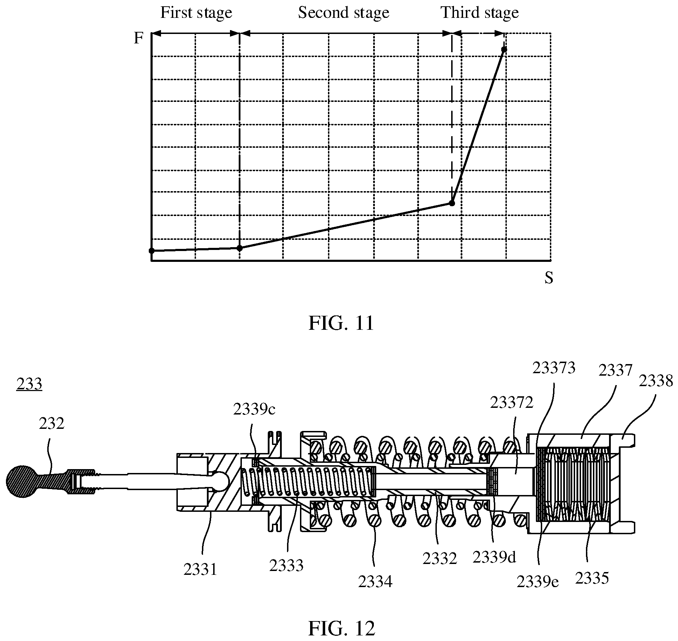

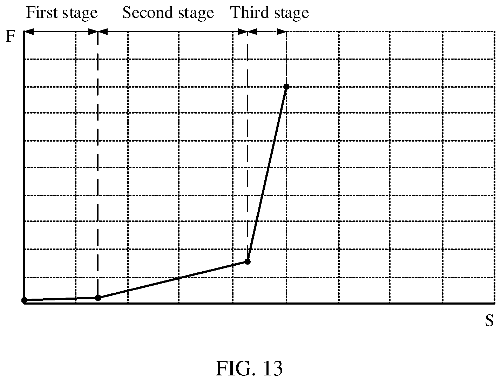

Refer to FIG. 10 to FIG. 13. FIG. 10 is a diagram of a structure of another pedal force feedback member 233 according to an embodiment of this application. FIG. 11 is a curve diagram of a relationship between a compression force F and a compression stroke S of the pedal force feedback member 233 shown in FIG. 10 in three stages. FIG. 12 is a diagram of a structure of still another pedal force feedback member 233 according to an embodiment of this application. FIG. 13 is a curve diagram of a relationship between a compression force F and a compression stroke S of the pedal force feedback member 233 shown in FIG. 12 in three stages. In some embodiments of this application, at least one of the groove bottom of the accommodating groove 23313 of the first moving member 2331, the groove bottom of the accommodating groove 23321 of the second moving member 2332, an end surface of the first moving member 2331, or an end surface of the second moving member 2332 is configured to fasten one or more gaskets. At least one of the stepped surface of the second stepped structure 23373 and the end surface that is of the second moving member 2332 and that is close to the first fixed member 2337 is configured to fasten one or more gaskets.

For example, FIG. 10 shows an example in which a gasket 2339a is fastened to the groove bottom of the accommodating groove 23321 of the second moving member 2332. The gasket 2339a on the groove bottom of the accommodating groove 23321 of the second moving member 2332 can increase pre-pressure of the first elastic member 2333. Therefore, in the first stage in which the pedal force feedback member 233 is compressed, an initial compression force of the pedal force feedback member 233 increases. It is easy to understand that a larger quantity of gaskets 2339a or a larger thickness of the gasket 2339a in the axial direction of the drive rod 232 indicates a larger initial compression force of the pedal force feedback member 233. The example in which the gasket 2339a is fastened to the groove bottom of the accommodating groove 23321 of the second moving member 2332 shown in FIG. 10 is used. For a relative relationship between a compression force F and a compression stroke S of the pedal force feedback member 233, refer to a first stage in FIG. 11.

Similarly, fastening a gasket to the groove bottom of the accommodating groove 23313 of the first moving member 2331 can also increase the initial compression force of the pedal force feedback member 233 in the first stage. Details are not described again.

According to a same principle, in the embodiment shown in FIG. 10, a side that is of the barrier wall 2336 and that faces the second elastic member 2334 is configured to fasten one or more gaskets 2339b. The gasket 2339b fastened to the barrier wall 2336 can increase pre-pressure of the second elastic member 2334, and the pre-pressure also increases the initial compression force of the pedal force feedback member 233 in the first stage. Similarly, a larger quantity of gaskets 2339b or a larger thickness of the gasket 2339b in the axial direction of the drive rod 232 indicates a larger initial compression force of the pedal force feedback member 233.

FIG. 12 shows an example in which gaskets are separately fastened to two end surfaces of the second moving member 2332 and a gasket is fastened to the stepped surface of the second stepped structure 23373. A gasket 2339c is fastened to an end surface that is of the second moving member 2332 and that is close to the first moving member 2331. The gasket 2339c can reduce a distance that the first moving member 2331 moves relative to the second moving member 2332 in the axial direction of the drive rod 232. Therefore, a compression stroke S of the pedal force feedback member 233 in the first stage is shortened. It is easy to understand that a larger quantity of gaskets 2339c or a larger thickness of the gasket 2339c in the axial direction of the drive rod 232 indicates a shorter compression stroke S of the pedal force feedback member 233 in the first stage. The example in which the gasket 2339c is fastened to the end surface that is of the second moving member 2332 and that is close to the first moving member 2331 shown in FIG. 12 is used. For a relative relationship between a compression force F and a compression stroke S of the pedal force feedback member 233, refer to a first stage in FIG. 13.

Similarly, fastening a gasket to an end surface of the first moving member 2331 can also shorten the compression stroke S of the pedal force feedback member 233 in the first stage. Details are not described again.

A gasket 2339d is fastened to the end surface that is of the second moving member 2332 and that is close to the first fixed member 2337. The gasket 2339d can reduce a distance that the second moving member 2332 moves in a process in which the second moving member 2332 compresses only the second elastic member 2334. That is, a compression stroke S of the pedal force feedback member 233 in the second stage is shortened. It is easy to understand that a larger quantity of gaskets 2339d or a larger thickness of the gasket 2339d in the axial direction of the drive rod 232 indicates a shorter compression stroke S of the pedal force feedback member 233 in the second stage. The example in which the gasket 2339d is fastened to the end surface that is of the second moving member 2332 and that is close to the first fixed member 2337 shown in FIG. 12 is used. For a relative relationship between a compression force F and a compression stroke S of the pedal force feedback member 233, refer to a second stage in FIG. 13.

A gasket 2339e is fastened to the stepped surface of the second stepped structure 23373, and the gasket 2339e can increase pre-pressure of the third elastic member 2335. In this way, in the third stage in which the pedal force feedback member 233 is compressed, the elastic force obtained after the third elastic member 2335 and the second elastic member 2334 are connected in parallel increases. Therefore, in this stage, a curvature of a relationship curve of a compression force F and a compression stroke S of the pedal force feedback member 233 also increases, for example, as shown in a third stage in FIG. 13. It is easy to understand that a larger quantity of gaskets 2339e or a larger thickness of the gasket 2339e in the axial direction of the drive rod 232 indicates a larger curvature of a relationship curve of a compression force F and a compression stroke S of the pedal force feedback member 233 in the second stage.

It can be learned from the analysis of embodiments shown in FIG. 10 to FIG. 13 that, on the premise that an original mechanical part of the pedal box is unchanged, a correspondence between a compression force F and a compression stroke S of the pedal box can be adjusted by adding gaskets of different thicknesses to corresponding mechanical parts, so that the pedal box implements output based on different F-S curves. Because the compression force F and the compression stroke S of the pedal box respectively reflect a pedal pressing force and a pedal pressing stroke performed by a driver on the brake pedal, proper design of a quantity of gaskets, a position and a thickness of a gasket, and the like enables the pedal box to satisfy use requirements of different drivers, so that a customized pedal box is implemented at low costs.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A pedal box integrated with two sensors, wherein the pedal box comprises a housing, a drive rod, a pedal force feedback member, a pressure sensor, and a displacement sensor, the displacement sensor comprises a moving component and a fixed component, and the housing is configured to:
accommodate the moving component, the pedal force feedback member, and the pressure sensor, wherein the pedal force feedback member and the pressure sensor are sequentially arranged inside the housing in an axial direction of the drive rod; and
fasten the fixed component, wherein the moving component is disposed between the pedal force feedback member and the fixed component in a radial direction of the drive rod.

2. The pedal box according to claim 1, wherein the housing comprises a first cover plate, the first cover plate is disposed opposite to the pedal force feedback member in the axial direction of the drive rod, the first cover plate comprises an opening that communicates an inside of the housing with an outside of the housing, a size of the opening in the radial direction of the drive rod is larger than a radial size of the drive rod, and the opening is used for the drive rod to extend from the inside of the housing to the outside of the housing.

3. The pedal box according to claim 1 or 2, wherein one end of the drive rod is exposed outside the housing, and the end of the drive rod is configured to receive driving of a pedal force; and the other end of the drive rod is accommodated inside the housing, the other end of the drive rod is disposed on a side that is of the pedal force feedback member and that faces away from the pressure sensor, and the other end of the drive rod is configured to compress the pedal force feedback member, and drive the moving component to move in the axial direction of the drive rod.

4. The pedal box according to any one of claims 1 to 3, wherein one end surface of the pressure sensor in the axial direction of the drive rod is in contact with the pedal force feedback member, the other end surface of the pressure sensor in the axial direction of the drive rod is in contact with an inner wall of the housing, and the pressure sensor is configured to detect a compression force applied by the drive rod to the pedal force feedback member.

5. The pedal box according to any one of claims 1 to 4, wherein the housing comprises a boss, the boss is disposed, in the radial direction of the drive rod, on a side that is of a side wall of the housing and that faces away from the inside of the housing, an installation groove is provided on an end surface that is of the boss and that faces away from the inside of the housing, and the installation groove is configured to install the fixed component.

6. The pedal box according to any one of claims 1 to 5, wherein the moving component is fastened to the drive rod, the fixed component is configured to detect displacement of the moving component, and in the radial direction of the drive rod, a projection of the fixed component and a projection of a movement path of the moving component at least partially overlap.

7. The pedal box according to claim 6, wherein the moving component comprises a first connection member and a second connection member, the first connection member extends in the axial direction of the drive rod, the second connection member is connected to one end of the first connection member in the axial direction of the drive rod, the second connection member extends in the radial direction of the drive rod, and the second connection member is configured to be fastened to the drive rod.

8. The pedal box according to any one of claims 1 to 7, wherein the inside of the housing comprises a partition plate, the partition plate is configured to divide the inside of the housing into a first chamber and a second chamber that are arranged in the radial direction of the drive rod, a size of the first chamber is larger than a size of the second chamber in the radial direction of the drive rod, the first chamber is configured to accommodate the moving component, the pedal force feedback member, and the pressure sensor, and the second chamber is configured to accommodate the moving component.

9. The pedal box according to claim 8, wherein the partition plate comprises a through groove that communicates the first chamber with the second chamber; in the axial direction of the drive rod, a length of the through groove is greater than a length of a movement path of the drive rod; and the through groove is used for a part of the moving component to extend to the first chamber to be fastened to the drive rod.

10. The pedal box according to any one of claims 1 to 9, wherein the pedal force feedback member comprises a first moving member, a second moving member, a first elastic member, a second elastic member, and a third elastic member, and the first moving member is disposed between the drive rod and the second moving member in the axial direction of the drive rod, wherein
the drive rod is configured to drive the first moving member to move relative to the second moving member in the axial direction of the drive rod;
before the first moving member is in contact with the second moving member, the first moving member is configured to drive, through the first elastic member, the second moving member to compress the second elastic member; and
after the first moving member is in contact with the second moving member, the drive rod is configured to drive, through the first moving member, the second moving member to first compress only the second elastic member and then compress both the second elastic member and the third elastic member.

11. The pedal box according to claim 10, wherein a flange is disposed on a circumference of the first moving member, the flange extends in the radial direction of the drive rod, a clamping slot is provided on a circumference of the flange, the clamping slot extends in the radial direction of the drive rod, and the clamping slot is configured to clamp the moving component.

12. The pedal box according to claim 10 or 11, wherein the pedal force feedback member further comprises a first fixed member and a second fixed member, and the first fixed member and the second fixed member are sequentially arranged, in the axial direction of the drive rod, on a side that is of the second moving member and that faces away from the first moving member, wherein
the first fixed member comprises an accommodating groove, the accommodating groove of the first fixed member runs through the first fixed member in the axial direction of the drive rod, a stepped structure is disposed on an inner wall of the accommodating groove of the first fixed member, a stepped surface of the stepped structure faces away from the second moving member, and the stepped surface of the stepped structure is configured to limit a position of one end of the third elastic member; and
one end surface of the second fixed member in the axial direction of the drive rod is configured to limit a position of the other end of the third elastic member, and the end surface of the second fixed member is in contact with an end surface of the first fixed member; and the other end surface of the second fixed member in the axial direction of the drive rod is in contact with the pressure sensor.

13. The pedal box according to claim 12, wherein an accommodating groove is provided on the other end surface of the second fixed member in the axial direction of the drive rod, and the accommodating groove of the second fixed member is configured to accommodate at least a part of a structure of the pressure sensor in the axial direction of the drive rod.

14. A braking system, comprising a controller, a braking apparatus, and the pedal box according to any one of claims 1 to 13, wherein the controller is configured to:
control, in response to a detection signal of either of the pressure sensor and the displacement sensor, the braking apparatus to perform braking.

15. A vehicle, comprising a brake pedal and the braking system according to claim 14, wherein the brake pedal is in drive connection to the drive rod of the pedal box, and the braking system is configured to brake a wheel of the vehicle.
